# EUROPEAN PATENT APPLICATION

(11) **EP 1 887 825 A1**
(43) Date of publication of application: **13.02.2008**
(21) Application number: 06746009.7
(22) Date of filing: 02.05.2006
(51) Int. Cl.: H04Q 7/38

(54) **TRANSFER RATE CONTROL METHOD, MOBILE STATION, AND RADIO BASE STATION**

(30) Priority: 02.05.2005 JP 2005134299
(71) Applicant: NTT DoCoMo Inc., Chiyoda-Ku Tokyo 100-6150 (JP)
(72) Inventor: USUDA, Masafumi, NTT SoCoMo, Inc., Int.Prop.Dpt, Chiyoda-ku, Tokyo 100-6150 (JP); UMESH, Anil, NTT SoCoMo, Inc., Int.Prop.Dpt, Chiyoda-ku, Tokyo 100-6150 (JP)
(74) Representative: HOFFMANN EITLE
(86) International application number: PCT/JP2006/309159
(87) International publication number: WO 2006/118302

(57) **Abstract**

The present invention simplifies management of a transmission rate of data flows of a plurality of priority levels, and reduces load in the mobile station and the radio base station.

A transmission rate control method according to the present invention includes: transmitting, at the radio base station Node B, a common absolute rate control channel including a priority level and the transmission rate; transmitting, at the mobile station, when the mobile station has data flows of a plurality of priority levels, all the data flows at a transmission rate, which is included in the common absolute rate control channel, corresponding to the highest priority level among the plurality of priority levels.

## Description

### [Technical Field]

The present invention relates to a transmission rate control method, a mobile station, and a radio base station for controlling a transmission rate in an uplink.

### [Background Art]

In a conventional mobile communication system, in an uplink from a mobile station UE to a radio base station Node B, a radio network controller RNC is configured to determine a transmission rate of a dedicated channel, in consideration of radio resources of the radio base station Node B, an interference volume in an uplink, transmission power of the mobile station UE, transmission processing performance of the mobile station UE, a transmission rate required for an upper application, and the like, and to notify the determined transmission rate of the dedicated channel by a message in a layer-3 (Radio Resource Control Layer) to both of the mobile station UE and the radio base station Node B.

Here, the radio network controller RNC is provided at an upper level of the radio base station Node B, and is an apparatus configured to control the radio base station Node B and the mobile station UE.

In general, data communications often cause burst traffic compared with voice communications or TV communications. Therefore, it is preferable that a transmission rate of a channel used for the data communications is changed fast.

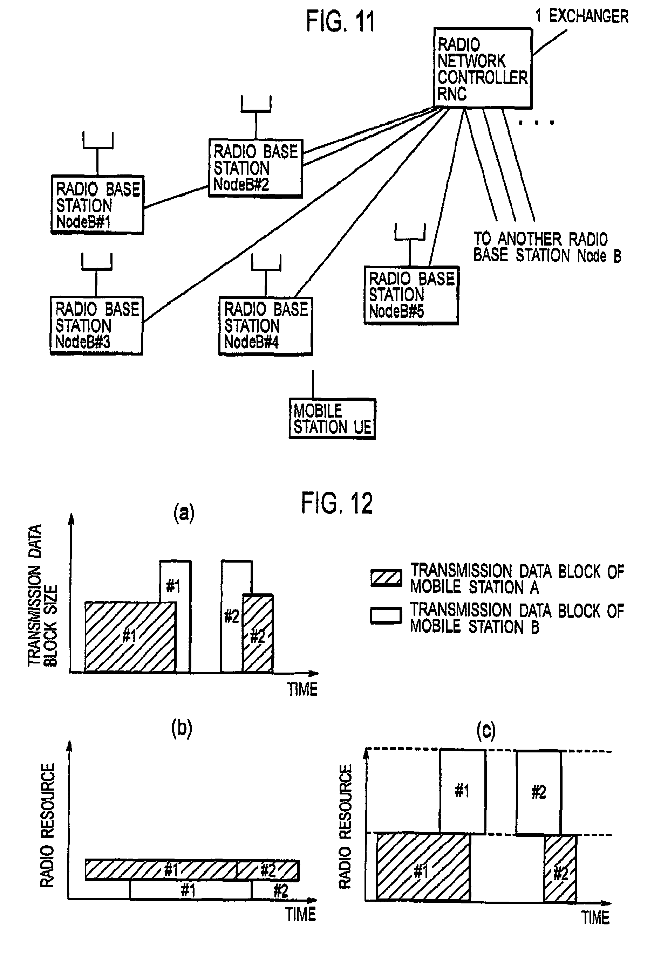

However, as shown in FIG. 11, the radio network controller RNC integrally controls a plurality of radio base stations Node B in general. Therefore, in the conventional mobile communication system, there has been a problem that it is difficult to perform fast control for changing of the transmission rate of channel (for example, per approximately 1 through 100 ms), due to processing load, processing delay, or the like.

In addition, in the conventional mobile communication system, there has also been a problem that costs for implementing an apparatus and for operating a network are substantially increased even if the fast control for changing of the transmission rate of the channel can be performed.

Therefore, in the conventional mobile communication system, control for changing of the transmission rate of the channel is generally performed on the order from a few hundred ms to a few seconds.

Accordingly, in the conventional mobile communication system, when burst data transmission is performed as shown in FIG. 12(a), the data are transmitted by accepting low-speed, high-delay, and low-transmission efficiency as shown in FIG. 12 (b), or, as shown in FIG. 12 (c), by reserving radio resources for high-speed communications to accept that radio bandwidth resources in an unoccupied state and hardware resources in the radio base station Node B are wasted.

It should be noted that both of the above-described radio bandwidth resources and hardware resources are applied to the vertical radio resources in FIG. 12.

Therefore, the 3rd Generation Partnership Project (3GPP) and the 3rd Generation Partnership Project 2 (3GPP2), which are international standardization organizations of the third generation mobile communication system, have discussed a method for controlling radio resources at high speed in a layer-1 and a media access control (MAC) sub-layer (a layer-2) between the radio base station Node B and the mobile station UE, so as to utilize the radio resources effectively. Such discussions or discussed functions will be hereinafter referred to as "Enhanced Uplink (EUL)".

In the EUL, a radio base station Node B is configured to transmit a common absolute rate control channel (EDCH-absolute rate grant channel (E-AGCH)) for transmitting, to a plurality of mobile stations UE, a ratio between the transmission power of an enhanced dedicated physical data channel (E-DPDCH) and the transmission power of a dedicated physical control channel (DPCCH) (a transmission power ratio).

Meanwhile, proposed is a radio base station Node B capable of achieving a desired QoS for each of the mobile stations UE by assigning the transmission rate preferentially to a mobile station with a high priority level, while including a priority level in a common absolute rate control channel (E-AGCH) for increase radio network capacity (for example, see Non-patent Document 1).

In addition, as shown in Non-patent Document 2, when a mobile station UE performs communication by use of an enhanced dedicated channel (EDCH), the mobile station UE is able to use data flows of a plurality of priority levels.

However, in the conventional EUL, a mobile station UE communicating by use of data flows of a plurality of priority levels is required to control the transmission rate of each data flow for each priority level, when the mobile station UE receives a common absolute rate control channel (E-AGCH). Accordingly, a problem arises that the configurations of the mobile station UE and the radio base station Node B become complicating.
Non-patent Document 1: 3GPP TSG-RAN R2-050896
Non-patent Document 2: 3GPP TSG-RAN TS25.309 v6.2.0

### [Disclosure of the Invention]

Hence, the present invention has been made in view of the above-mentioned points, and aims to provide a transmission rate control method, a mobile station and a radio base station that make it possible to simplify management of the transmission rate of data flows of a plurality of priority levels, and to reduce loads in the mobile station and the radio base station.

A first aspect of the present invention is summarized as a transmission rate control method for controlling a transmission rate of data to be transmitted from a mobile station to a radio base station through an uplink, the transmission rate control method including: transmitting, at the radio base station, a common absolute rate control channel including a priority level and the transmission rate; transmitting, at the mobile station, when the mobile station has data flows of a plurality of priority levels, all the data flows at a transmission rate, which is included in the common absolute rate control channel, corresponding to the highest priority level among the plurality of priority levels.

A second aspect of the present invention is summarized as a mobile station performed a transmission rate control method for controlling a transmission rate of data to be transmitted from a mobile station to a radio base station through an uplink, including: a receiver section configured to receive a common absolute rate control channel transmitted from the radio base station and including a priority level and the transmission rate; and a transmitter section configured to transmit when the mobile station has data flows of a plurality of priority levels, all the data flows at a transmission rate, which is included in the common absolute rate control channel, corresponding to the highest priority level among the plurality of priority levels.

### [Brief Description of the Drawings]

[Fig. 1] Fig. 1 is a functional block diagram of a mobile station of a mobile communication system according to a first embodiment of the present invention.
[Fig. 2] Fig. 2 is a functional block diagram of a baseband signal processing section in the mobile station of the mobile communication system according to the first embodiment of the present invention.
[Fig. 3] Fig. 3 is a functional block diagram of a MAC-e processing section of the baseband signal processing section in the mobile station of the mobile communication system according to the first embodiment of the present invention.
[Fig. 4] Fig. 4 is a functional block diagram of a radio base station of the mobile communication system according to the first embodiment of the present invention.
[Fig. 5] Fig. 5 is a functional block diagram of a baseband signal processing section in the radio base station of the mobile communication system according to the first embodiment of the present invention.
[Fig. 6] Fig. 6 is a functional block diagram of a MAC-e and layer 1 processing section (configuration for uplink, of the baseband signal processing section in a radio base station of the mobile communication system according to the first embodiment of the present invention.
[Fig. 7] Fig. 7 is a functional block diagram of a MAC-e function section of the MAC-e and layer 1 processing section (configuration for uplink), of the baseband signal processing section in a radio base station of the mobile communication system according to the first embodiment of the present invention.
[Fig. 8] Fig. 8 is a functional block diagram of a radio network controller of the mobile communication system according to the first embodiment of the present invention.
[Fig. 9] Fig. 9 is a flowchart showing an operation of the mobile communication system according to the first embodiment of the present invention.
[Fig. 10] Fig. 10 is a diagram showing an example of a table which associates "priority level," "E-RNTI," and "necessity of monitoring" with each other in the mobile station of the mobile communication system according to the first embodiment of the present invention.
[Fig. 11] Fig 11 is an entire configuration diagram of a general mobile communication system.
[Fig. 12] Fig. 12 is a diagram for explaining operations at the time of burst data transmission in a conventional mobile communication system.

### [Best Modes for Carrying out the Invention]

### (Mobile communication system according to a first embodiment of the present invention)

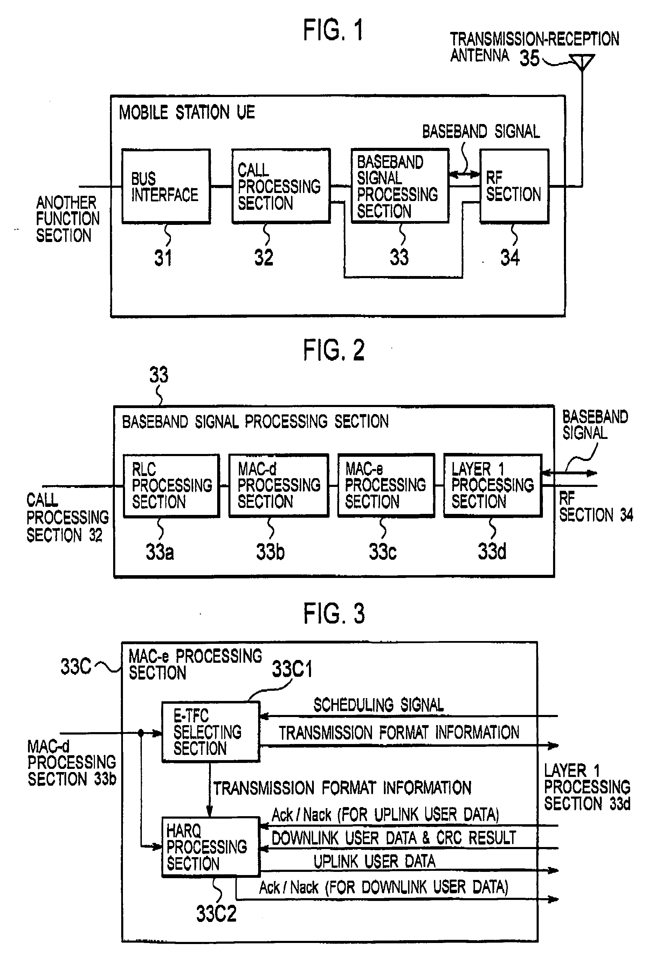

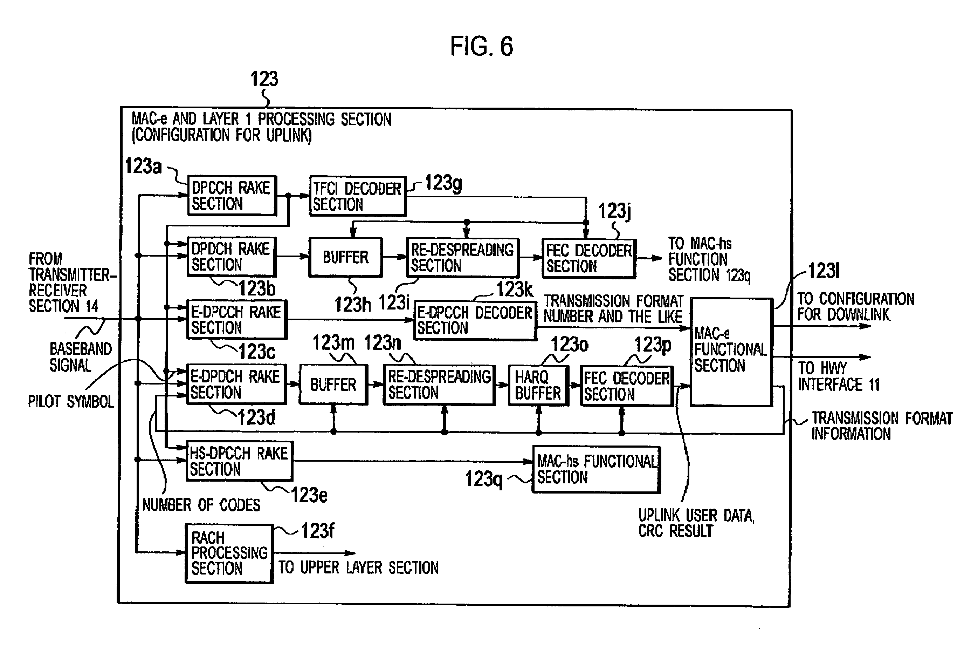

An explanation will be given for the configuration of a mobile communication system according to a first embodiment of the present invention in reference to Figs 1 to 8. Note that the mobile communication system according to this embodiment includes a plurality of radio base stations Node B#1 to #5 and a radio network controller RNC as shown in Fig. 11.

In addition, in the mobile communication system according to this embodiment, a "High Speed Downlink Packet Access (HSDPA) " is used in a downlink, and an "Enhanced Uplink (EUL)" is used in an uplink. It should be noted that in both of the HSDPA and the EUL, retransmission control (N process stop and wait) shall be performed by a "Hybrid Automatic Repeat Request (HARQ)".

Therefore, an Enhanced Dedicated Physical Channel (E-DPCH), configured of an Enhanced Dedicated Physical Data Channel (E-DPDCH) and an Enhanced Dedicated Physical Control Channel (E-DPCCH), and a Dedicated Physical Channel (DPCH), configured of a Dedicated Physical Data Channel (DPDCH) and a Dedicated Physical Control Channel (DPCCH), are used in the uplink.

Here, the E-DPCCH transmits control data for the EUL such as a transmission format number for defining a transmission format (transmission block size, or the like) of the E-DPDCH, HARQ related information (the number of retransmissions, or the like), and scheduling related information (transmission power, buffer residence-volume, or the like in the mobile station UE).

In addition, the E-DPDCH is paired with the E-DPCCH, and transmits user data for the mobile station UE based on the control data for the EUL transmitted through the E-DPCCH.

The DPCCH transmits control data such as a pilot symbol that is used for RAKE combining, SIR measurement, or the like, a Transport Format Combination Indicator (TFCI) for identifying a transmission format of uplink DPDCH, and a transmission power control bit in a downlink.

In addition, the DPDCH is paired with the DPCCH, and transmits user data for the mobile station UE based on the control data transmitted through the DPCCH. However, if user data to be transmitted does not exist in the mobile station UE, the DPDCH can be configured not to be transmitted.

In addition, in the uplink, a "High Speed Dedicated Physical Control Channel (HS-DPCCH)" and a Random Access Channel (RACH) are used, both of which are required when the HSPDA is applied.

The HS-DPCCH transmits a Channel Quality Indicator (CQI) and a transmission acknowledgement signal ("Ack" or "Nack") for a high speed dedicated physical data channel.

As shown in FIG. 1, the mobile station UE according to this embodiment is provided with a bus interface 31, a call processing section 32, a baseband signal processing section 33, a radio frequency (RF) section 34, and a transmission - reception antenna 35.

However, these functions can be independently present as a hardware, and can be partly or entirely integrated, or can be configured through a process of software.

The bus interface 31 is configured to forward user data outputted from the call processing section 32 to another functional section (for example, an application related functional section). In addition, the bus interface 31 is configured to forward user data transmitted from another functional section (for example, the application related functional section) to the call processing section 32.

The call processing section 32 is configured to perform a call control processing for transmitting and receiving user data.

The baseband signal processing section 33 is configured to, acquire user data by performing a layer-1 processing including a despreading processing, a RAKE combining processing, and a Forward Error Correction (FEC) decode processing, a Media Access Control (MAC) processing including a MAC-e processing and a MAC-d processing, and a Radio Link Control (RLC) processing, against the baseband signals transmitted from the RF section 34, so as to transmit the acquired user data to the call processing section 32.

In addition, the baseband signal processing section 33 is configured to generate the baseband signals by performing the RLC processing, the MAC processing, or the layer-1 processing against the user data transmitted from the call processing section 32 so as to transmit the baseband signals to the RF section 34.

Detailed description of the functions of the baseband signal processing section 33 will be given later. The RF section 34 is configured to generate baseband signals by performing the detection processing, the filtering processing, the quantization processing, or the like against radio frequency signals received via the transmission-reception antenna 35, so as to transmit the generated baseband signals to the baseband signal processing section 33.

As shown in FIG. 2, the baseband signal processing section 33 is provided with an RLC processing section 33a, a MAC-d processing section 33b, a MAC-e processing section 33c, and a layer-1 processing section 33d.

The RLC processing section 33a is configured to perform a processing (RLC processing) of an upper layer of a layer-2, against user data transmitted from the call processing section 32 so as to transmit the user data to the MAC-d processing section 33b.

The MAC-d processing section 33b is configured to attach a channel identifier header, and to generate the transmission format in the uplink in accordance with the transmission power limit in the uplink.

As shown in FIG. 3, the MAC-e processing section 33c is provided with an Enhanced Transport Format Combination (E-TFC) selecting section 33cl and an HARQ processing section 33c2.

The E-TFC selecting section 33c1 is configured to determine a transmission format (E-TFC) of the E-DPDCH and the E-DPCCH, based on scheduling signals transmitted from the radio base station Node B.

In addition, the E-TFC selecting section 33c1 is configured to transmit transmission format information on the determined transmission format (that is, a transmission data block size, a transmission power ratio between the E-DPDCH and the DPCCH, or the like) to the layer-1 processing section 33d, and to transmit the determined transmission format information to the HARQ processing section 33c2.

Such scheduling signals are information notified in the cell where the mobile station UE is located, and include control information for all the mobile stations located in the cell, or a specific group of the mobile stations located in the cell.

The HARQ processing section 33c2 is configured to perform process control for the "stop-and-wait of N-process", so as to transmit the user data in the uplink based on the transmission acknowledgement signals (Ack/Nack for uplink data) transmitted from the radio base station Node B.

Specifically, the HARQ processing section 33c2 is configured to determine, based on a CRC result entered from the layer-1 processing section 33d, whether or not the reception processing of the uplink user data has been successful. Then, the HARQ processing section 33c2 generates the transmission acknowledgement signal (Ack or Nack) based on the determination result, and transmits the generated transmission acknowledgement signal to the layer 1 processing section 33d. When the determination result is "OK", the HARQ processing section 33c2 transmits, to the MAC-d processing section 33d, the downlink user data entered from the layer 1 processing section 33d.

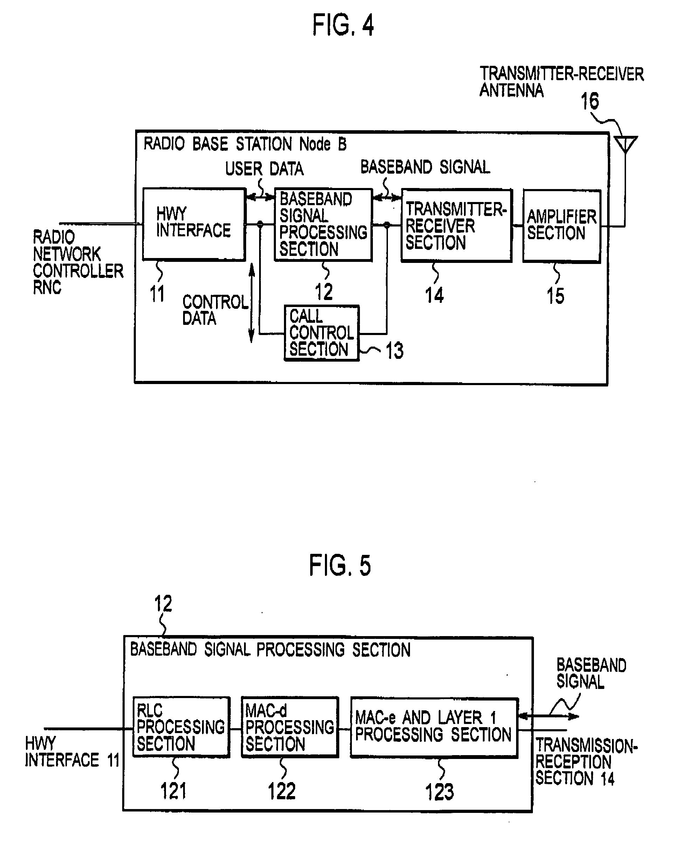

As shown in Fig. 4, the radio base station Node B according to this embodiment is provided with an HWY interface 11, a baseband signal processing section 12, a call control section 13, at least one transmitter-receiver section 14, at least one amplifier section 15, and at least one transmission - reception antenna 16.

The HWY interface 11 is an interface with a radio network controller RNC. Specifically, the HWY interface 11 is configured to receive user data transmitted from the radio network controller RNC to a mobile station UE via a downlink, so as to enter the user data to the baseband signal processing section 12. In addition, the HWY interface 11 is configured to receive control data for the radio base station Node B from the radio network controller RNC, so as to enter the received control data to the call control section 13.

In addition, the HWY interface 11 is configured to acquire, from the baseband signal processing section 12, user data included in the uplink signals which are transmitted from a mobile station UE via an uplink, so as to transmit the acquired user data to the radio network controller RNC. Further, the HWY interface 11 is configured to acquire control data for the radio network controller RNC from the call control section 13, so as to transmit the acquired control data to the radio network controller RNC.

The baseband signal processing section 12 is configured to generate baseband signals by performing such as the RLC processing, the MAC processing (MAC-d processing or MAC-e processing), and the layer-1 processing against the user data acquired from the HWY interface 11, so as to forward the generated baseband signals to the transmitter-receiver section 14.

Here, the MAC processing in the downlink includes an HARQ processing, a scheduling processing, a transmission rate control processing, or the like. In addition, the layer-1 processing in the downlink includes a channel coding processing of user data, a spreading processing, or the like.

In addition, the baseband signal processing section 12 is configured to extract user data by performing the layer-1 processing, the MAC processing (MAC-d processing or MAC-e processing), and the RLC processing against the baseband signals acquired from the transmitter-receiver section 14, so as to forward the extracted user data to the HWY interface 11.

Here, the MAC-e processing in the uplink includes an HARQ processing, a scheduling processing, a transmission rate control processing, a header disposal processing, or the like. In addition, the layer-1 processing in the uplink includes the despreading processing, the RAKE combining processing, an error correction decode processing, or the like.

Detailed description of the functions of the baseband signal processing section 12 will be given later. In addition, the call control section 13 is configured to perform a call control processing based on the control data acquired from the HWY interface 11.

The transmitter-receiver section 14 is configured to perform a processing of converting baseband signals acquired from the baseband signal processing section 12, into radio frequency signals (downlink signals), so as to transmit the converted radio frequency signals to the amplifier section 15. In addition, the transmitter-receiver 14 is configured to perform a processing of converting the radio frequency signals (uplink signals) acquired from the amplifier section 15, into the baseband signals, so as to transmit the converted baseband signals to the baseband signal processing section 12.

The amplifier section 15 is configured to amplify the downlink signals acquired from the transmitter-receiver section 14, so as to transmit the amplified downlink signals to the mobile station UE via the transmission - reception antenna 16. In addition, the amplifier 15 is configured to amplify the uplink signals received by the transmission - reception antenna 16, so as to transmit the amplified uplink signals to the transmitter-receiver section 14.

As shown in FIG. 5, the baseband signal processing section 12 is provided with an RLC processing section 121, a MAC-d processing section 122, and a MAC-e and layer 1 processing section 123.

The MAC-e and layer-1 processing section 123 is configured to perform, against the baseband signals acquired from the transmitter-receiver section 14, the despreading processing, a RAKE combining processing, an error correction decode processing, an HARQ processing, or the like.

The MAC-d processing section 122 is configured to perform a header disposal processing and the like, against an output signal from the MAC-e and layer 1 processing section 123.

The RLC processing section 121 is configured to perform such as a retransmission control processing in the RLC layer, a reconstruction processing in an RLC-SDU or the like, against the output signals from the MAC-d processing section 122.

However, these functions are not clearly divided per hardware, and can be acquired by software.

As shown in Fig, 6, the MAC-e and layer 1 processing section 123 (in a configuration for uplink) is provided with a DPCCH RAKE section 123a, a DPDCH RAKE section 123b, an E-DPCCH RAKE section 123c, an E-DPDCH RAKE section 123d, an HS-DPCCH RAKE section 123e, a RACH processing section 123f, a TFCI decoder section 123g, buffers 123h and 123m, re-despreading sections 123i and 123n, FEC decoder sections 123j and 123p, an E-DPCCH decoder section 123k, a MAC-e function section 1231, a HARQ buffer 1230, and a MAC-hs function section 123q.

The E-DPCCH RAKE section 123c is configured to perform the despreading processing and the RAKE combining processing by using a pilot symbol included in the DPCCH, against the E-DPCCH in the baseband signals transmitted from the transmitter-receiver section 14.

The E-DPCCH decoder section 123k is configured to acquire transmission format number related information, HARQ related information, scheduling related information, or the like, by performing the decode processing against the RAKE combining outputs of the E-DPCCH RAKE section 123c, so as to enter the acquired information to the MAC-e functional section 1231.

The E-DPDCH RAKE section 123d is configured to perform a despreading processing by using the transmission format information (the number of codes) transmitted from the MAC-e functional section 1231 and the RAKE combining processing using the pilot symbol included in the DPCCH, against the E-DPDCH in the baseband signals transmitted from the transmitter-receiver section 14.

The buffer 123m is configured to store the RAKE combining outputs of the E-DPDCH RAKE section 123d based on the transmission format information (the number of symbols) transmitted from the MAC-e functional section 1231.

The re-despreading section 123n is configured to perform a despreading processing against the RAKE combining outputs of the E-DPDCH RAKE section 123d stored in the buffer 123m, based on the transmission format information (a spreading factor) transmitted from the MAC-e functional section 1231.

The HARQ buffer 123o is configured to store the despreading processing outputs of the re-despreading section 123n, based on the transmission format information transmitted from the MAC-e functional section 1231.

The FEC decoder section 123p is configured to perform an error correction decoding processing (the FEC decoding processing) against the despreading processing outputs of the re-despreading section 123n, the outputs stored in the HARQ buffer 1230, based on the transmission format information (transmission data block size) transmitted from the MAC-e functional section 1231.

The MAC-e functional section 1231 is configured to calculate and output the transmission format information (the number of codes, the number of symbols, the spreading factor, the transmission data block size, and the like) based on the transmission format number related information, the HARQ related information, the scheduling related information, and the like, which are acquired from the E-DPCCH decoder section 123k.

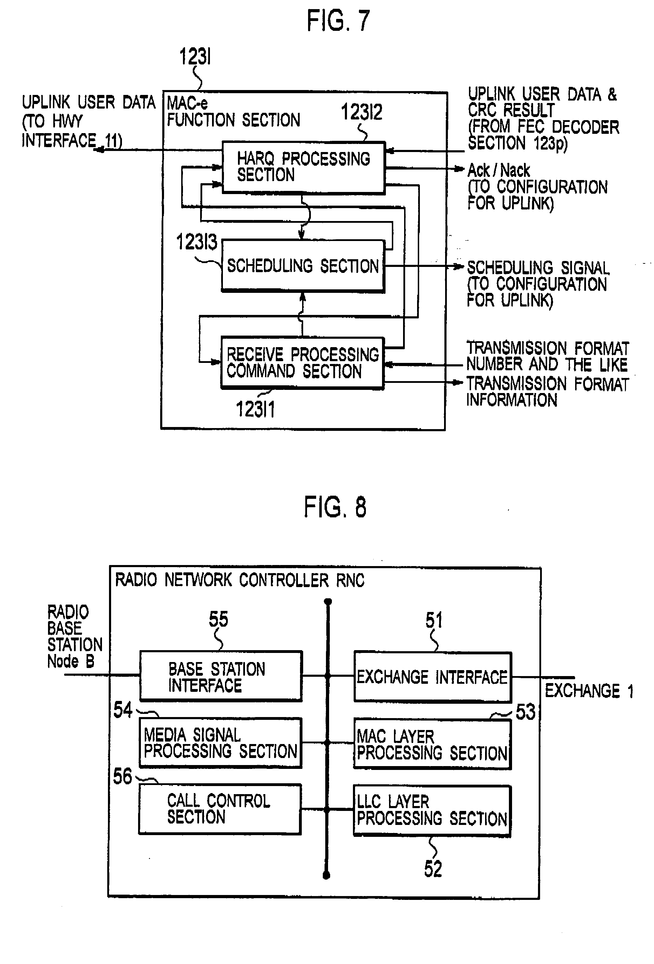

In addition, as shown in FIG. 7, the MAC-e function section 1231 is provided with a receive processing command section 12311, a HARQ control section 12312 and a scheduling section 12313.

The receive processing command section 12311 is configured to transmit, to the HARQ control section 12312, the transmission format number related information, the HARQ related information, and the scheduling related information, which are entered from the E-DPCCH decoder section 123k.

In addition, the receive processing command section 12311 is configured to transmit, to the scheduling section 12313, the scheduling related information entered from the E-DPCCH decoder 123k.

Further, the receive processing command section 12311 is configured to output the transmission format information corresponding to the transmission format number entered from the E-DPCCH decoder section 123k.

The HARQ control section 12312 is configured to determine whether or not the reception processing of uplink user data has been successful, based on the CRC result entered from the FEC decoder section 123p. Then, the HARQ control section 12312 is configured to generate a transmission acknowledgement signal (Ack or Nack), based on the determination result, so as to transmit the generated transmission acknowledgement signals to the configuration for the downlink of the baseband signal processing section 12. In addition, the HARQ control section 12312 is configured to transmit the uplink user data entered from the FEC decoder section 123p to the radio network controller RNC, when the above determination result has been "OK".

In addition, the HARQ control section 12312 is configured to clear soft decision information stored in the HARQ buffer 1230 when the above determination result is "OK". On the other hand, when the above determination result is "NG", the HARQ control section 12312 is configured to store the uplink user data in the HARQ buffer 1230.

In addition, the HARQ control section 12312 is configured to forward the above determination result to the receive processing command section 12311. Then, the receive processing control command section 12311 is configured to notify the E-DPDCH RAKE section 123d and the buffer 123m of a hardware resource to be prepared for the following transmission time interval (TTI), so as to perform notification for reserving the resource in the HARQ buffer 123o.

In addition, when the uplink user data is stored in the buffer 123m, the receive processing command section 12311 is configured to instruct the HARQ buffer 1230 and the FEC decoder section 123p to perform the FEC decoding processing after concatenating, per TTI, a newly received uplink user data and the uplink user data in a process corresponding to the TTI, the uplink user data stored in the HARQ buffer 1230.

The scheduling section 12313 is configured to transmit scheduling signals (an absolute rate control channel (E-AGCH), a relative rate control channel (E-RGCH) or the like) via a configuration for downlink.

The absolute rate control channel (E-AGCH) includes two kinds of channels, a common absolute rate control channel (common AGCH) and a dedicated absolute rate control channel (dedicated AGCH).

Here, an EDPDCH/DPCCH transmission power ratio ("transmission power ratio") and a CRC sequence masked with a mobile terminal identifier (E-RNTI) are mapped to each absolute rate control channel (E-AGCH).

Since the radio base station Node B grasps the priority level of each of the mobile stations UE, each of an E-RNTI is not required to show the priority level on the dedicated AGCH. Therefore, single E-RNTI is mapped to the dedicated AGCH. On the other hand, an E-RNTI mapped to a common AGCH differs based on each of the priority levels.

The radio network controller RNC according to the present embodiment is an apparatus located on upper level of the radio base station Node B and configured to control radio communication between the radio base station Node B and the mobile station UE.

As shown in Fig. 8, the radio network controller RNC according to this embodiment is provided with an exchange interface 51, an LLC layer processing section 52, a MAC layer processing section 53, a media signal processing section 54, a base station interface 55, and a call control section 56.

The exchange interface 51 is an interface with an exchange 1. The exchange interface 51 is configured to forward the downlink signals transmitted from the exchange 1 to the LLC layer processing section 52, and to forward the uplink signals transmitted from the LLC layer processing section 52 to the exchange 1.

The LLC layer processing section 52 is configured to perform an LLC (Logical Link Control) sub-layer processing such as a synthesis processing of a header (e.g. a sequence number), a trailer, or the like. The LLC layer processing section 52 is also configured to transmit the uplink signals to the exchange interface 51 and to transmit the downlink signals to the MAC layer processing section 53, after the LLC sub-layer processing is performed.

The MAC layer processing section 53 is configured to perform a MAC layer processing such as a priority control processing or a header granting processing. The MAC layer processing section 53 is also configured to transmit the uplink signals to the LLC layer processing section 52 and to transmit the downlink signals to the radio base station interface 55 (or a media signal processing section 54), after the MAC layer processing is performed.

The media signal processing section 54 is configured to perform a media signal processing against voice signals or real time image signals. The media signal processing section 54 is also configured to transmit the uplink signals to the MAC layer processing section 53 and to transmit the downlink signals to the radio base station interface 55, after the media signal processing is performed.

The radio base station interface 55 is an interface with the radio base station Node B. The radio base station interface 55 is configured to forward the uplink signals transmitted from the radio base station Node B to the MAC layer processing section 53 (or the media signal processing section 54) and to forward the downlink signals transmitted from the MAC layer processing section 53 (or the media signal processing section 54) to the radio base station Node B.

The call control section 56 is configured to perform a radio resource control processing, a channel setup and open processing by the layer-3 signaling, or the like. Here, the radio resource control processing includes a call admission control processing, a handover processing, or the like.

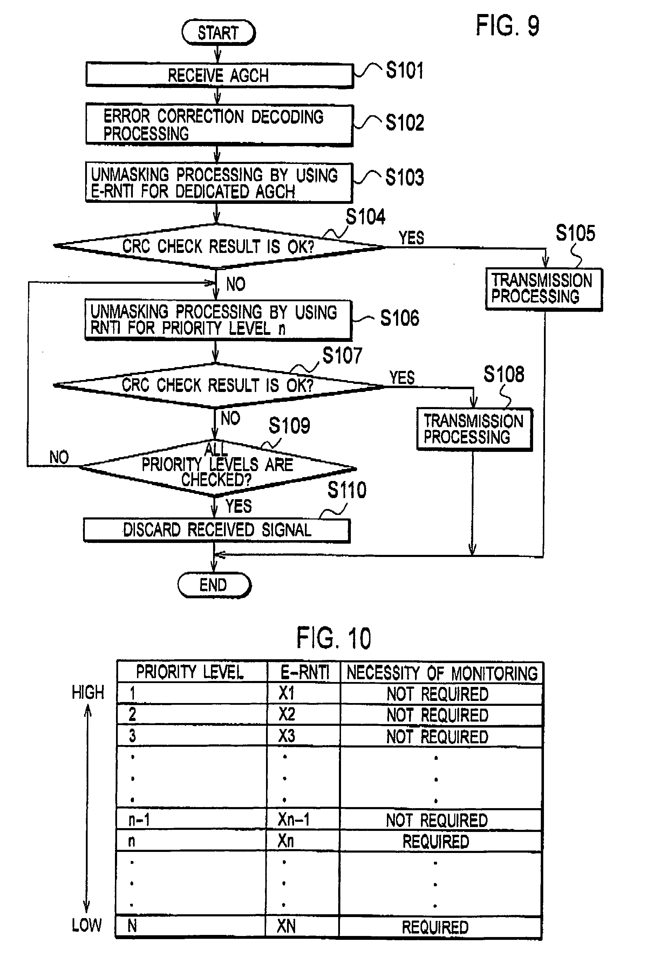

Descriptions will be given for an operation of the mobile station UE of the mobile communication system according to the first embodiment of the present invention with reference to Figs. 9 and 10.

As shown in Fig. 9, in step S101, the mobile station UE receives an absolute rate control channel (E-AGCH) transmitted from the radio base station, and, in step S102, performs an error correction decoding processing against the received absolute rate control channel (E-AGCH).

In step S103, the mobile station UE unmasks a CRC sequence by using an E-RNTI assigned to the dedicated AGCH. Then, in step S104, the mobile station UE performs a CRC check by using the unmasking result.

When the CRC check result is OK, in step S105, the mobile station UE determines that the received absolute rate control channel (dedicated AGCH) is assigned to the own mobile station UE, and starts a transmission processing based on a transmission power ratio (one kind of transmission rate) included in the absolute rate control channel (dedicated AGCH).

On the other hand, when the CRC check result has been "NG", in step S106, the mobile station UE unmasks the CRC sequence by using the E-RNTIs corresponding to the priority level n of the channel to which the own mobile station UE is connected, among the E-RNTIs assigned to the common AGCH. Then, in step S107, the mobile station UE performs the CRC check by using the unmasked result. Note that the E-RNTI is used in descending order, starting from the E-RNTI for highest priority level.

When the CRC check result is OK, in step S108, the mobile station UE starts the transmission process based on the transmission power ratio included in the E-AGCH.

On the other hand, when the CRC check result has been "NG", in step S109, the mobile station UE determines whether or not a priority level unused for the CRC check exists, of the priority level n of the channel to which the own mobile station UE is connected.

When the unused priority level exists, the processing returns to step S106. When the unused priority level does not exist, in step S110, the mobile station UE determines that the received signal is not addressed to the own mobile station UE, and discards the received signal.

Accordingly, when a mobile station UE has data flows of a plurality of priority levels, all the data flows can be transmitted at the transmission rate (the above-described transmission power ratio), which is included in the common E-AGCH, corresponding to the highest priority level among the plurality of priority levels.

Additionally, as shown in Fig. 10, the mobile station UE may be configured to manage the E-RNTIs of the priority levels that require monitoring, and to determine the transmission rate by use of the E-RNTI for the highest priority level among the plurality of priority levels that require monitoring.

Otherwise, the radio base station Node B may be configured to set a same transmission rate corresponding to the priority levels n to N in Fig. 10, while the mobile station UE may be configured to determine the transmission rate by use of any one of the E-RNTIs for the priority levels that require monitoring.

It should be noted that the present invention is not limited to the above-described embodiment, and that various modifications are possible.

### [Industrial Applicability]

As has been described above, according to the present invention, it is possible to provide a transmission rate control method, a mobile station, and a radio base station that make it possible to simplify management of the transmission rate of data flows of a plurality of priority levels, and to reduce loads in the mobile station and the radio base station.

## Claims

1. A transmission rate control method for controlling a transmission rate of data to be transmitted from a mobile station to a radio base station through an uplink, the transmission rate control method comprising:
transmitting, at the radio base station, a common absolute rate control channel including a priority level and the transmission rate;
transmitting, at the mobile station, when the mobile station has data flows of a plurality of priority levels, all the data flows at a transmission rate, which is included in the common absolute rate control channel, corresponding to the highest priority level among the plurality of priority levels.

2. A mobile station performed a transmission rate control method for controlling a transmission rate of data to be transmitted from a mobile station to a radio base station through an uplink, comprising:
a receiver section configured to receive a common absolute rate control channel transmitted from the radio base station and including a priority level and the transmission rate; and
a transmitter section configured to transmit when the mobile station has data flows of a plurality of priority levels, all the data flows at a transmission rate, which is included in the common absolute rate control channel, corresponding to the highest priority level among the plurality of priority levels.
